# FASCICULE DE BREVET EUROPEEN

(11) **EP 1 642 081 B1**
(45) Date de publication et mention de la délivrance du brevet: **25.04.2007**
(21) Numéro de dépôt: 04767571.5
(22) Date de dépôt: 05.07.2004
(51) Int. Cl.: F41B 5/12

(54) **CATAPULTE SOUS-MARINE A PROPULSION DE LA FLECHE SUR TOUTE LA LONGUEUR DU CANON**
UNTERWASSERKATAPULT MIT ENTLANG DER LÄNGE DES LAUFS ANGETRIEBENEM PFEIL
UNDERWATER CATAPULT IN WHICH THE ARROW IS PROPELLED ALONG THE LENGTH OF THE BARREL

(30) Priorité: 08.07.2003 FR 0308304
(43) Date de publication de la demande: 05.04.2006
(73) Titulaire: BERRY, Marc-Antoine, 47330 Douzains par Castillonnes (FR)
(72) Inventeur: BERRY, Marc-Antoine, 47330 Douzains par Castillonnes (FR)
(74) Mandataire: Roman, Michel
(86) Numéro de dépôt international: PCT/FR2004/001732
(87) Numéro de publication internationale: WO 2005/004594

(56) Documents cités:
- FR-A- 1 554 932
- FR-A- 2 795 604
- FR-A- 2 798 188
- US-A- 1 866 926
- US-A- 4 169 456
- US-A- 5 931 145

## Description

Cette invention est liée aux fusils sous-marins (lances harpons) et en particulier aux fusils à sandows (élastiques).

Sur les fusils à sandows commercialisés, les sandows trouvent leurs places en tête de canon dans des orifices ou sur des filetages femelles. Les gommes sont tendus à la force des bras le long de la flèche. (Seul les fusils chargés à la force musculaire sont autorisés sur les territoires français). Vu la longueur des élastiques et leurs points d'ancrages en tête de fusil, la flèche n'est propulsée que sur les deux tiers du canon, l'autre tiers étant réservé à la longueur initiale des élastomères et ces arbalètes ont un recul proportionnel au nombre de sandows chargés.

L'invention propose la propulsion de la flèche sur toute la longueur du canon et les sandows seront encore sous tension en extrémité de fusil après avoir libéré la flèche. Ce qui met ce fusil à sandows encore plus en concurrence avec les fusils à gaz comprimés, eux aussi favorisent la propulsion d'une flèche jusqu'au bout du canon.

En plaçant un système en extrémité de fusil (barres, poulies, axes, rouleaux, réas, roulements, roues) permettant le passage des gommes de: dessus à dessous le fût du fusil; en chargeant des sandows sur la flèche repris par d'autres chargés sous le canon, sur différents points d'ancrages, on obtient une propulsion sur toute la longueur du fût. En comparaison à un fusil classique de longueur égale, pour propulser une flèche de même longueur, de même diamètre avec le même nombre de sandows, de même qualité, on observe que la flèche propulsée sur toute la longueur du canon va plus vite, plus loin et sans recul en rapport à la flèche propulsée sur les deux tiers. En Chargeant sur la flèche des élastiques de section plus importante(20 ;24 ;28... millimètres), le chasseur toujours en quête de puissance peut additionner encore davantage de sandows de (16mm) sous le fusil, la flèche ne gênant pas le chargement dessous.

Avec ce procédé, le tir sur des poissons se déclenche de plus loin, le poisson est plus facilement transpercé (puissance), la flèche est guidée et propulsée plus longtemps (précision) et ce principe divise environ par dix le recul (agréments aux tirs).

L'arbalète est en bois massif (Bilinga, Doussié.... bois du Gabon) sculpté dans la masse. Sa longueur varie entre un mètre et un mètre soixante-dix pour quatre à cinq centimètres d'épaisseurs, le diamètre des flèches est de six à dix millimètres pour des longueurs d'un mètre vingt à deux mètres (toutes côtes données et matériaux utilisés dans les descriptions n'étant pas limitatifs). Le mécanisme qui bloque la flèche est inséré dans la crosse, les axes qui tiennent le mécanisme dans la crosse servent aussi de pivot à la détente et queue de gâchette.

La flèche (4) est catapultée sur toute la longueur du fusil à l'aide des sandows. Le fil de liaison des sandows propulseur de la flèche (a-**I**) finit sa course à un centimètre de l'extrémité du canon contre le fût et les gommes sont encore sous tension en fin de course. Le fil (a) finit en butée contre la partie supérieure du fût, sinon il y a déstabilisation de la flèche si le fil des sandows en passant dessous touche le talon la flèche.

En tête de canon se situe un système favorisant le passage et la tension des sandows de dessus à dessous le fusil. Ce système peut être : des axes, des barres, des poulies, des rouleaux, des roulements, des roues, des réas. Celui-ci est fixé à l'aide de : vis, tiges filetées, axes, tubes, rondelles, écrous.

Pour des questions pratiques, un sandow de très forte section (I) est chargé sur la flèche en passant sur les poulies et lié dessous à de multiples sandows (un, deux, trois....) de diamètre inférieur aux sandows du haut et de longueurs différentes entre eux pour une meilleure reprise de l'élasticité, commodité de chargement et puissance.

Le système d'accrochage des sandows sous le fût (B-D) peut se présenter de différentes manières suivant que l'on amarre le fil de liaison des élastiques ou leurs corps. Des ergots, fixes ou réglables (montés sur un rail) ou de grosses encoches servent de points d'appuis. Pour le sandow propulseur l'extrémité inférieure du fût peut servir de point d'appuis direct, on laisse alors dépasser davantage le canon devant les poulies. Les sandows du bas peuvent être liés au sandow (**I**) soit par le corps de sandow soit par le fil (a). Les poulies en extrémité de canon peuvent être montées en séries, en parallèles ou séries parallèles pour multiplier le nombres des élastiques. Si l'on multiplie le nombre d'élastiques sur la flèche; sous le fût en surmultipliant les gommes, on choisira des ergots en points d'appuis et les sandows auront un fil de liaison à chaque extrémité.

Ce système vous est présenté fixe, mais il peut aussi être mobile. Les poulies sont alors montées sur un bras de levier tiré dessous par l'intermédiaire de sandows.

Lorsque les poulies sont mobiles, le mouvement général peut être rotatif (6/10) ou de translation (8/10, 9/10, 10/10): lorsque le bras de levier pivotant sur un point d'appui pousse l'axe reliant les poulies, dans une gorge de déplacement.

Le rapport gain de puissance, encombrement du système et poids dans l'eau supérieur, intéressera un tireur sur cible ou un chasseur avec une arme courte.

Les poulies ont l'épaisseur du sandow: deux centimètres et le diamètre sera fonction de la largeur du canon. Le fil de liaison des gommes a une section de cinq millimètres pour les sandows propulseurs et de trois pour les tendeurs.

Les poulies peuvent être carénées pour permettre au fil largué de glisser sur tout le système sans risque d'accrochage.

Les sandows dessus sont nommés: sandows propulseurs et ceux de dessous : sandows tendeurs, on charge toujours plus de tension dessous, donc plus de sandows tendeurs pour éviter le décapelage des sandows propulseurs. Les sandows propulseurs auront une section supérieure où égale aux sandows tendeurs. Dans la recherche de la puissance: le dernier sandow tendeur chargé sera le plus court possible pour avoir une tension maximum dans la propulsion en bout de canon.

Le recul de l'arme avec ce système étant fortement inhibé, cette technologie peut être transféré à une arme terrestre.

Quelques questions se posent sur : l'absence de recul, la force développée retransmise à la flèche et la précision.

Pourquoi n'y a t'il pas de recul ? Pour répondre à cette question et à toutes celles qui vont suivre il faut se référer aux arbalètes conventionnelles et se poser la question: pourquoi ont elles du recul ? Et ce recul est directement proportionnel aux nombres d'élastiques tendus. La réponse évidente et physique est : action égale réaction. Mais l'expérience montre que le plus gros recul qu'encaisse votre main est dû au coup de fouet des sandows dans l'eau, car les élastiques ne sont pas tenus et libèrent une partie de leur énergie contre l'eau. Les fusils sous-marins classiques deviennent intenables à partir de cinq sandows chargés, si l'on considère que l'on met 60 kilos de force dans chaque élastique tendu, on aura un total de 300 kilos, l'invention permet d'emmagasiner encore plus de force et de ne pas avoir le recul engendré par le fouettement dans l'eau car les élastiques propulseurs tenus par les élastiques tendeurs empêchent ce coup de fouet. Le recul inhérent à la flèche éjectée est repris par les sandows tendeurs et leurs points d'appuis est orienté de façon à transmettre un départ en avant. Ce recul devient négligeable, alors qu'il était insupportable, c'est une constatation expérimentale.

Pourquoi cette arme est-elle si puissante ? De toute façon l'arme ne restitue que l'énergie emmagasinée au cour du chargement. Comme vous êtes libéré du problème du recul vous pouvez tendre des élastiques en plus grand nombre ; l'invention permet de charger dessus, dessous et la flèche est tractée jusqu'en extrémité de canon. Un autre avantage est le fait de pouvoir charger sur la flèche des sandows propulseurs de forte section (20; 22; 24 millimètres... et plus) inexploitables sur des arbalètes classiques car vous n'avez pas la force de les tendre à leur limite d'élasticité, mais avec l'invention proposée, en les reprenant dessous avec des sandows de (16 millimètres) tendus à leurs limite d'élasticité, vous obtenez des puissances inégalées et exploitables.

Pourquoi est-ce précis ? La flèche est linéairement guidée dans un rainurage jusqu'en extrémité de fût et la tête de la catapulte par sa largeur avec ses poulies et le carénage participent à la stabilité du fusil. Sur les armes conventionnelles il y a corrélation entre la puissance et le diamètre de la flèche propulsée, si l'on met trop de force sur une section inappropriée, la flèche perd sa stabilité car celle-ci est tirée de façon explosive sur les deux tiers du canon, de plus les sandows sont décalés par rapport à l'axe du trait, ces défauts sont corrigés par l'adjonction des réas ou les sandows tirent alors dans l'axe du trait et les forces sont mieux transmises à la flèche sur toute la longueur du canon. Le travail mieux réparti permet de repousser les limites imposées par une propulsion classique.

On peut distinguer deux types de tir: en pleine eau où il faut un maximum de puissance et à trou où trop de force abîme la pointe contre la roche après avoir traversé le poisson. En capelant les sandows propulseurs et tendeurs sur une pièce coulissante le long d'un rail fixé sous le fusil, à l'aide d'un bouton bloquant le rappel des sandows tendeurs , on obtient une arme à usage multiples dont la puissance est rapidement modulable.

### FICHE TECHNIQUE :

Vue de profil du fusil (déchargé 1/10 et chargé 4/10)
- A :: Poulies en tête de fusil avec son axe au centre et l'oeil du fil de la flèche sur L'écrou servant de gobe fil.
- B :: Butée des sandows propulseurs contre la tête du fusil. (Permet de charger **I** en C).
- C :: Ergot de la flèche sur lequel on charge les sandows du haut (**I**).
- D :: Point d'ancrage pour le chargement des sandows du bas (**II**).
- E :: Crosse à double poignée.
- **I :**: Sandows du haut (propulseurs) à charger en C (ergot de la flèche).
- **II :**: Sandows du bas (tendeurs) à charger en D (le nombre de sandows sous le fût à tendre est fonction de la section du sandow propulseur).

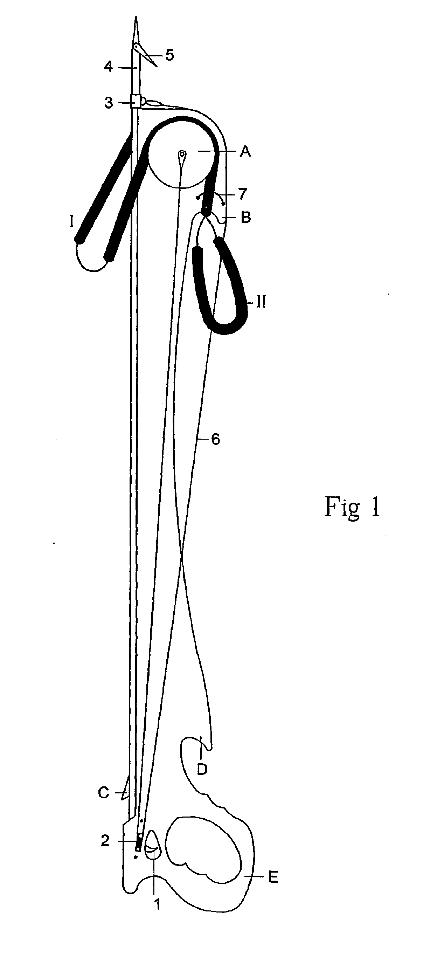

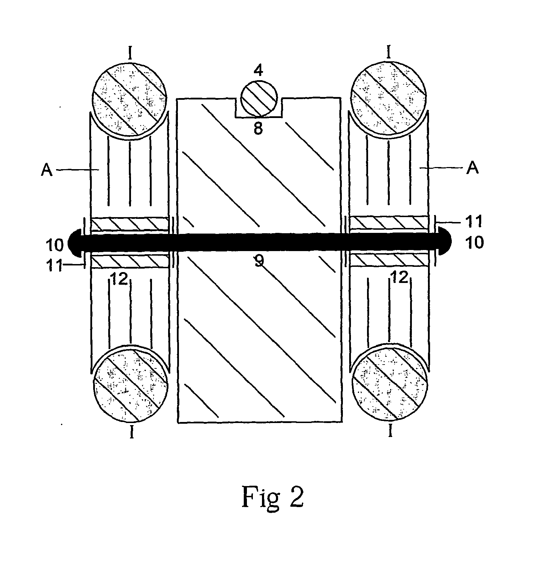

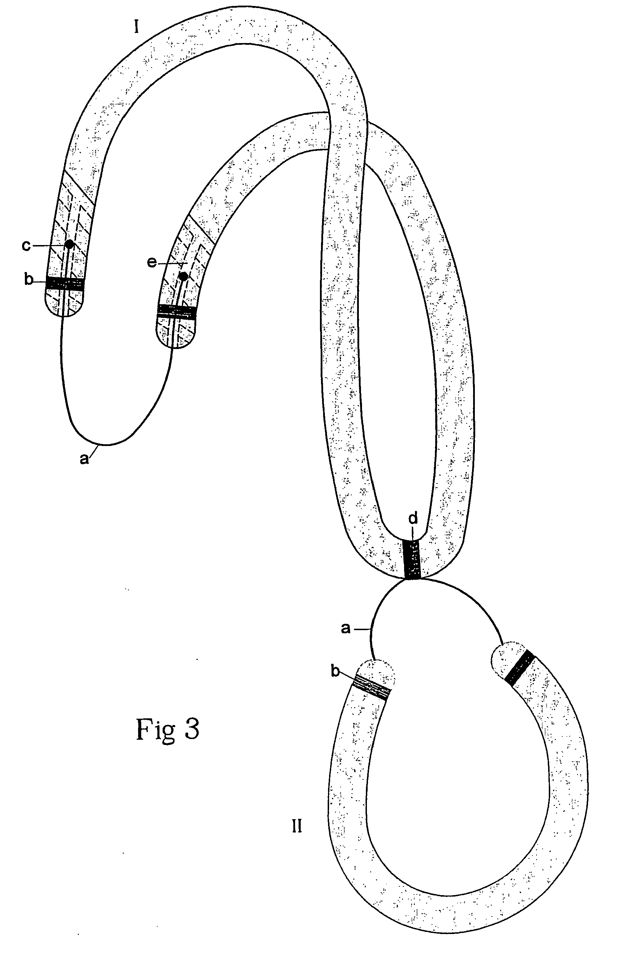

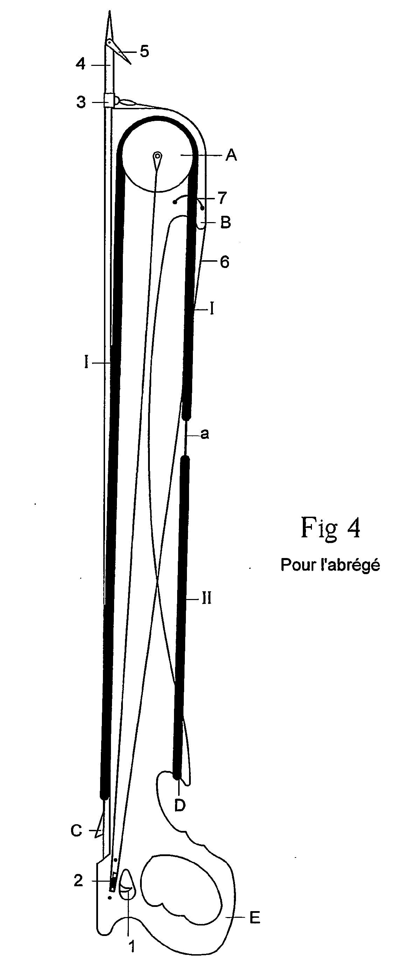

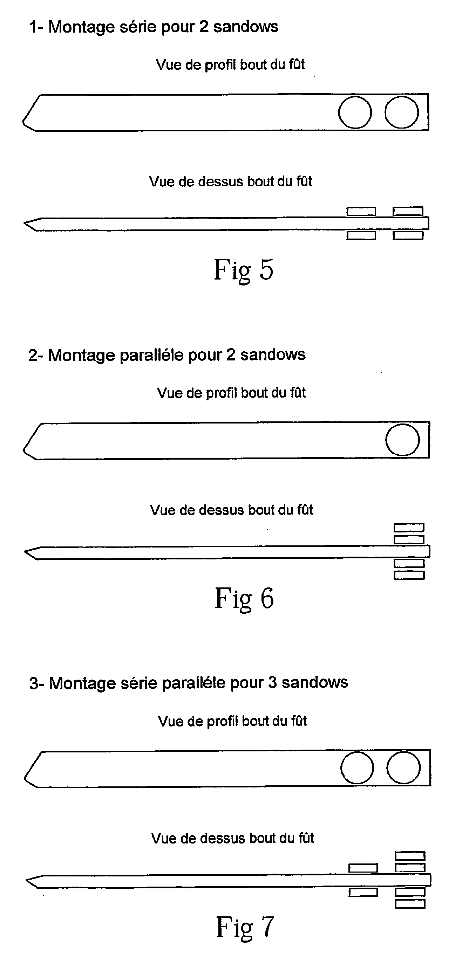

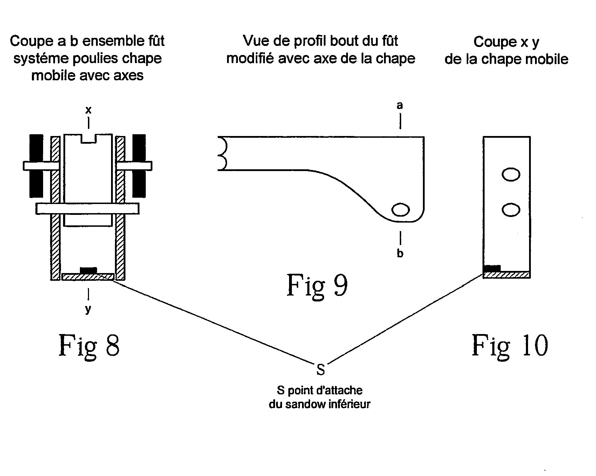

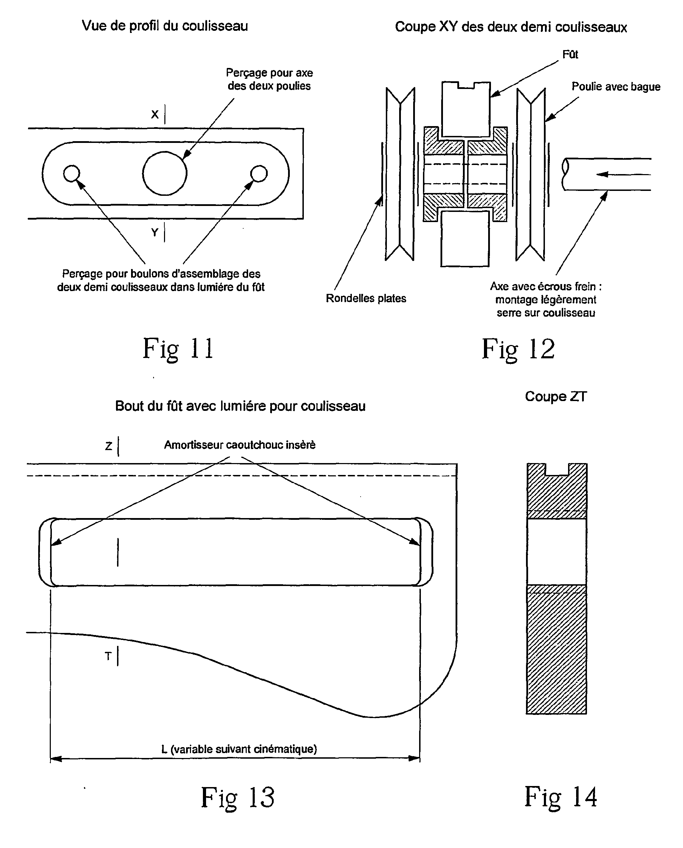

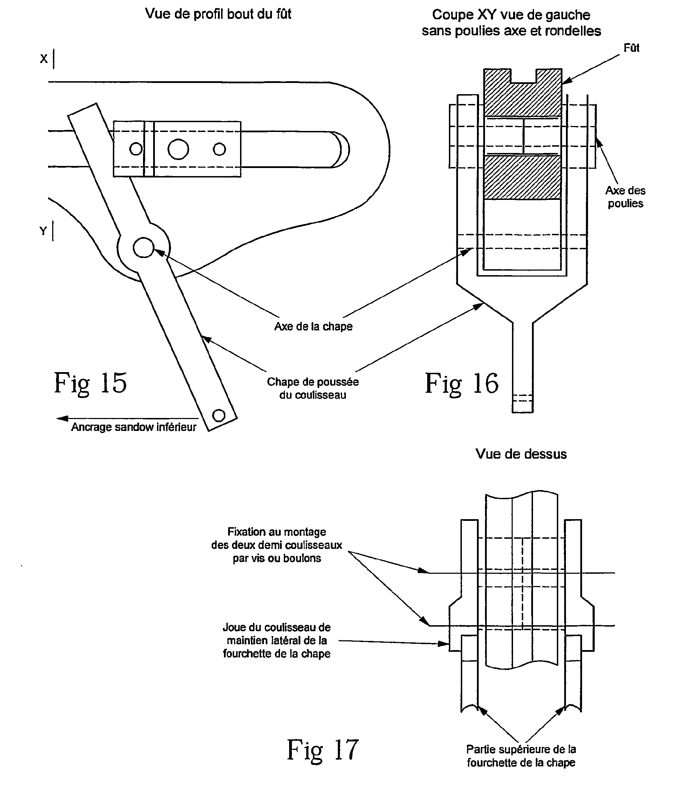

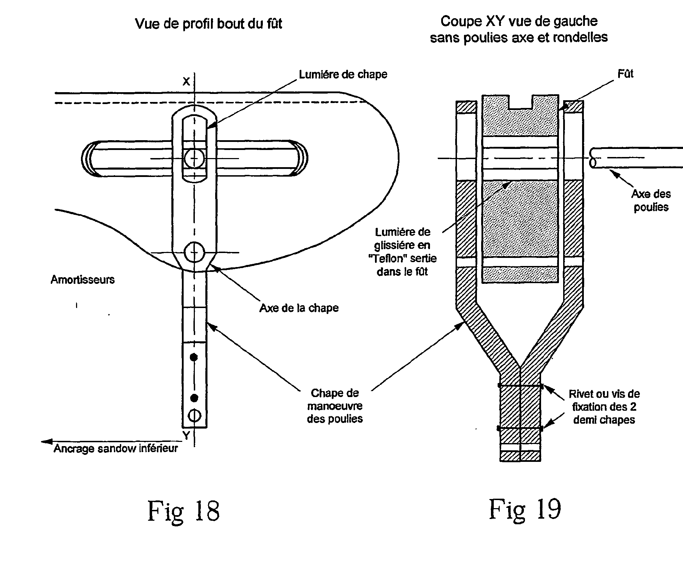

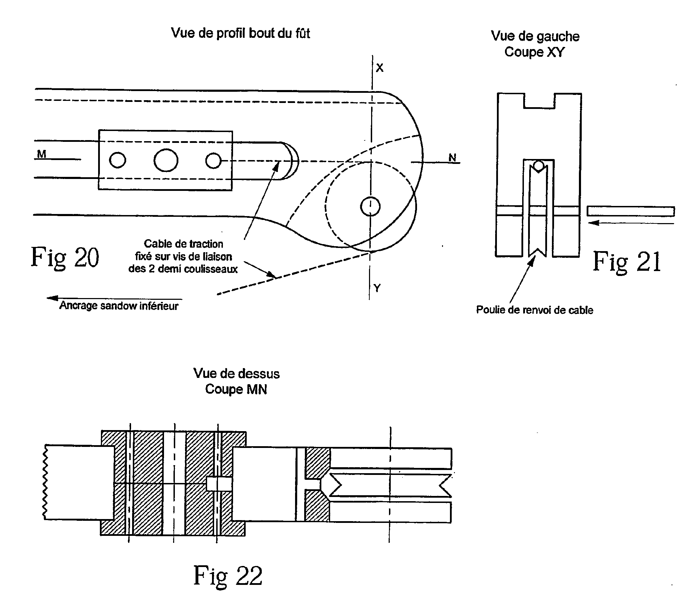

L'invention concerne directement les points A,B,D et (3/10, Fig 3).
- 1 :: Détente.
- 2 :: Croc de largage du fil.
- 3 :: Coulisseau.
- 4 :: Flèche.
- 5 :: Ardillon.
- 6 :: Fil.
- 7 :: Tunnel de passage des sandows (un simple fil empêche les sandows détendus de partir, une fois l'arme déchargée).

Plan de coupe de la tête du fusil(2/10)
- 8 :: Rainurage pour le guidage de la flèche.
- 9 :: Axe reliant les poulies et servant de point d'appui dans la tête de fusil.
- 10 :: Ecrous.
- 11:: Rondelles.
- 12 :: Tubes entre axe (9) et poulies(A), (un tube peut aussi traverser la tête du fusil, on peut aussi mettre un roulement à la place de 12).

Schéma des sandows liés (3/10, Fig3, un seul élastique **I** et **II** est représenté).
- a :: Fil reliant les deux extrémités d'un sandow (pour résister à la butée en bout de fusil, ce fil doit être d'une section d'environ cinq millimètres pour les sandows propulseurs et de trois millimètres pour les sandows tendeurs).
- b :: Surliure empêchant le fil de sortir du sandow.
- c :: Noeud bloquant le fil contre la surliure.
- d :: Liaison par une pièce, une ligature avec du bout ou une sangle reliant les sandows **I** (propulseur) et **II** (tendeur).
- e :: Canal au centre du sandow.

Pour une meilleure compréhension des dessins, un seul sandow tendeur et propulseur est représenté. Pour une même section un sandow propulseur peut être lié à deux sandows tendeurs.

## Revendications

1. Catapulte sous-marine à propulsion de la flèche sur toute la longueur du canon comprenant des sandows propulseurs et tendeurs ainsi que des réas, **caractérisée en ce que**des poulies permettant le passage des sandows de dessus à en dessous du canon sont disposées en tête de fusil et sont : soit fixes, soit mobiles.

2. Catapulte selon la revendication n°1, **caractérisée en ce que** les poulies sont montées en série pour deux sandows.

3. Catapulte selon la revendication n°1, **caractérisée en ce que** les poulies sont montées en parallèle pour deux sandows .

4. Catapulte selon la revendication n°1, **caractérisée en ce que** les poulies sont montées en série parallèle pour trois sandows.

5. Catapulte selon la revendication n°1, **caractérisée en ce que** les poulies sont carénées pour permettre au fil largué de glisser sur tout le système sans risque d'accrochage.

6. Catapulte selon la revendication n°1, **caractérisée en ce qu'**elle comporte un ensemble à poulies mobiles où un sandow supplémentaire chargé dessous actionne les poulies par l'intermédiaire d'un bras de levier.

7. Catapulte selon la revendication n°1, **caractérisée en ce que** les poulies coulissent dans une lumière et peuvent être poussées ou tirées.

8. Catapulte selon la revendication n°7, **caractérisée par** une commande par poussage d'un coulisseau

9. Catapulte selon la revendication n°7, **caractérisée par** une commande par une chape coulissante

10. Catapulte selon la revendication n°7, **caractérisée par** une commande par tirage d'un coulisseau

11. Catapulte selon la revendication n°1, **caractérisée en ce que** les sandows propulseurs sont liés par une pièce ou ligaturés aux sandows tendeurs le nombre d'élastomères, et leurs sections est fonction de.la force de chaque individu et de la puissance recherchée pour propulser une flèche d'un calibre donné;
même si pour un diamètre défini d'élastique, on peut charger deux sandows tendeurs pour un sandow propulseur, pour des raisons de résistance et de longévité de la gomme, on utilise le rapport de section entre le sandow propulseur et le nombre de sandows tendeurs.

12. Catapulte selon la revendication n°1, **caractérisée en ce que** les sandows peuvent être bloqués dans leur course pour diminuer la puissance.

13. Catapulte selon la revendication n°1, **caractérisée en ce que** la technologie décrite peut être appliquée à une arbalète terrestre.

14. Catapulte selon la revendication n°1, **caractérisée en ce que** les sandows propulseurs et tendeurs peuvent être sectionnés par leur milieu en brins distincts et raccordés entre eux par des fils de liaisons, donc avoir un fil de liaison à chaque extrémité.

## Claims

1. Underwater catapult in which the arrow is propelled along the entire length of the barrel comprising bungee cords for propulsion and tension as well as sheaves, **characterized in that** the pulleys allowing the bungee cords to pass above or below the barrel are disposed at the head of the gun and are either fixed or mobile.

2. Catapult according to claim 1 **characterized in that** the pulleys are assembled in series for two bungee cords.

3. Catapult according to claim 1 **characterized in that** the pulleys are assembled in parallel for two bungee cords.

4. Catapult according to claim 1 **characterized in that** the pulleys are assembled in series parallel for three bungee cords.

5. Catapult according to claim 1 **characterized in that** the pulleys are enclosed to allow the released wire to slide along the system without snagging.

6. Catapult according to claim 1 **characterized in that** it comprises a series of mobile pulleys in which an additional bungee cord loaded below actuates the pulleys through a lever arm.

7. Catapult according to claim 1 **characterized in that** the pulleys slide in a hole and can be pushed or drawn.

8. Catapult according to claim 7 **characterized by** a control consisting of pushing a slide.

9. Catapult according to claim 7 **characterized by** a control consisting of a sliding yoke.

10. Catapult according to claim 7 **characterized by** a control consisting of pulling a slide.

11. Catapult according to claim 1 **characterized in that** the propelling bungee cords are joined by a part or are bound to the bungee cords, the number of elastomers and their sections being related to the force of each user and the power sought to propel an arrow of a given caliber;
even if for a given diameter of elastic, two tensioning bungee cords can be loaded for one propelling bungee cord, for reasons of strength and life of the rubber, the ratio of the section between the propelling bungee cord and the number of tensioning bungee cords is applied.

12. Catapult according to claim 1 **characterized in that** the bungee cords can be blocked in their travel in order to decrease the power.

13. Catapult according to claim 1 **characterized in that** the technology described could be applied to a crossbow used on land.

14. Catapult according to claim 1 **characterized in that** the propelling bungee cords and the tensioning bungee cords can be divided at their mid-point into separate strands and joined together by connecting wires, therefore having one connecting wire at each end.

## Patentansprüche

1. Unterwasser-Katapult mit einem über die ganze Länge des Laufs angetriebenen Pfeil, mit Gummiseilen für den Antrieb und Spannern, sowie mit Schurscheiben, **gekennzeichnet dadurch, dass** die Rollen zur Umlenkung der Gummiseile von der Oberseite des Laufs zur Unterseite des Laufs am Kopf des Katapults entweder beweglich angeordnet und oder mit diesem fest verbunden sind.

2. Katapult gemäss Anspruch 1, **gekennzeichnet dadurch, dass** die Umlenkrollen für zwei Gummiseile in Serie geschaltet sind.

3. Katapult gemäss Anspruch 1, **gekennzeichnet dadurch, dass** die Umlenkrollen für zwei Gummiseile parallel geschaltet sind.

4. Katapult gemäss Anspruch 1, **gekennzeichnet dadurch, dass** die Umlenkrollen für drei Gummiseile in Serie parallel geschaltet sind.

5. Katapult gemäss Anspruch 1, **gekennzeichnet dadurch, dass** die Umlenkrollen verkleidet sind, damit das Abschussseil, ohne hängen zu bleiben, das gesamte System entlang gleiten kann.

6. Katapult gemäss Anspruch 1, **gekennzeichnet dadurch, dass** es eine Reihe beweglicher Rollen besitzt, die mit einem darunter gespannten, zusätzlichen Gummiseil mit Hilfe eines Hebelarms betätigt werden.

7. Katapult gemäss Anspruch 1, **gekennzeichnet dadurch, dass** die Rollen in einer Öffnung gleiten und geschoben und gezogen werden können.

8. Katapult gemäss Anspruch 7, **gekennzeichnet durch** die Betätigung **durch** Schieben eines Gleitstücks.

9. Katapult gemäss Anspruch 7, **gekennzeichnet durch** die Betätigung **durch** einen verschiebbaren Gabelbügel.

10. Katapult gemäss Anspruch 7, **gekennzeichnet durch** die Betätigung **durch** Ziehen eines Gleitstücks.

11. Katapult gemäss Anspruch 1, **gekennzeichnet dadurch, dass** die zum Antrieb dienenden Gummiseile durch ein Bauteil oder ein Band mit den zum Spannen verwendeten Gummiseilen verbunden sind, dass die Anzahl der Elastomerelemente und ihre Querschnitte von der Kraft der jeweiligen Person und der zum Antrieb eines Pfeils einer bestimmten Stärke gewünschten Leistung abhängt, wobei für einen definierten Durchmesser des elastischen Elements zwei Spann-Gummiseile für ein Antriebs-Gummiseil gespannt werden können und wobei aus Gründen der Haltbarkeit und der Lebensdauer des Gummis, das Querschnittverhältnis zwischen Antriebs-Gummiseil und der Anzahl der Spann-Gummiseile verwendet wird.

12. Katapult gemäss Anspruch 1, **gekennzeichnet dadurch, dass** die Gummiseile auf ihrem Weg blockiert werden können, um die Leistung zu verringern.

13. Katapult gemäss Anspruch 1, **gekennzeichnet dadurch, dass** sich die beschriebene Technologie bei einer oberirdisch eingesetzten Armbrust anwenden lässt.

14. Katapult gemäss Anspruch 1, **gekennzeichnet dadurch, dass** die Antriebs-Gummiseile und Spanner in der Mitte in getrennte Adern geteilt werden können, die miteinander durch Verbindungsseile verbunden werden können, so dass sich an jedem Ende ein Verbindungsseil befindet.
